# EUROPÄISCHE PATENTSCHRIFT

(11) **EP 3 934 878 B1**
(45) Veröffentlichungstag und Bekanntmachung des Hinweises auf die Patenterteilung: **07.06.2023**
(21) Anmeldenummer: 20718532.3
(22) Anmeldetag: 18.02.2020
(51) Int. Cl.: B29B 7/84, B29B 7/48, B29B 7/60, B29B 7/72, B29B 7/82, B29C 48/00, B29C 48/10, B29C 48/44, B29C 48/92, C08G 63/08, C08G 63/78

(54) **VERFAHREN UND ANLAGE ZUR HERSTELLUNG VON POLYLACTID AUS EINER LACTIDMISCHUNG MITTELS POLYMERISATION**
METHOD AND FACILITY FOR PRODUCING POLYLACTIDE FROM A LACTIDE MIXTURE BY MEANS OF POLYMERIZATION
PROCÉDÉ ET INSTALLATION DE PRODUCTION D'ACIDE POLYLACTIQUE À PARTIR D'UN MÉLANGE DE LACTIDES PAR POLYMÉRISATION

(30) Priorität: 04.03.2019 DE 102019105335
(43) Veröffentlichungstag der Anmeldung: 12.01.2022
(73) Patentinhaber: Koch, Reinhard, 01609 Gröditz (DE)
(72) Erfinder: BERTHEL, Dirk, 04741 Rosswein (DE); MÜLLER, Joachim, 09669 Frankenberg (DE); KOCH, Reinhard, 01609 Gröditz (DE)
(74) Vertreter: Hofmann, Klaus
(86) Internationale Anmeldenummer: PCT/DE2020/100113
(87) Internationale Veröffentlichungsnummer: WO 2020/177810

(56) Entgegenhaltungen:
- WO-A1-2009/141139
- DE-A1- 19 720 916
- DE-A1-102017 005 998
- DE-A1-102017 006 638
- US-A1- 2014 296 399

## Beschreibung

Die Erfindung betrifft ein Verfahren und eine Anlage zur Herstellung von Polylactid (PLA) mittels Polymerisation nach dem Oberbegriff des Anspruches 1, wobei eine kontinuierliche Produktion von qualitätsgerechtem PLA derart erfolgt, in dem aus den Ausgangskomponenten fortlaufend in einem präzise gesteuerten Prozess, gegebenenfalls unter Zugabe von weiteren Materialien, ein umwelt- und kundengerechtes Material mit exakt definierten Eigenschaften erzeugt werden kann.

Polylactide (PLA), umgangssprachlich auch Polymilchsäuren genannt, sind synthetische Polymere, die zu den Polyestern zählen. Sie sind aus vielen, chemisch aneinander gebundenen Milchsäuremolekülen aufgebaut. Diese aufgrund des asymmetrischen Kohlenstoffatoms optisch aktiven Polymere treten meist in der Form von D- oder als L-Lactide auf.

Polylactide sind vor allem durch die ionische Polymerisation von Lactid, einem ringförmigen Zusammenschluss von zwei Milchsäuremolekülen, zugänglich. Polylactide werden durch Ringöffnungspolymerisation erzeugt. Bei Temperaturen zwischen 140 und 180 °C sowie der Einwirkung katalytischer Zinnverbindungen (z. B. Zinnoktoat) findet eine Ringöffnungspolymerisation statt. So werden Kunststoffe mit einer hohen Molekülmasse und Festigkeit erzeugt. Lactid selbst lässt sich durch Vergärung von Melasse oder durch Fermentation von Glucose mit Hilfe verschiedener Bakterien herstellen. Darüber hinaus können hochmolekulare und reine Polylactide mit Hilfe der so genannten Polykondensation direkt aus Milchsäure erzeugt werden. In der industriellen Produktion ist allerdings die Entsorgung des Lösungsmittels problematisch.

Bekannt ist die ringöffnende Polymerisation von Dilactid zu Polylactid. Die Polymerisation von Milchsäure zu hochmolekularer Milchsäure ist von untergeordneter Bedeutung. Üblicherweise werden organische Zinnverbindungen (Di-Oktoate) eingesetzt, weil sie im Monomer und im Polymer gut löslich sind und beispielsweise von der FDA (U.S. Food and Drug Administration) zugelassen sind. Die Polymerisation startet im sogenannten Schmelzekessel mit einer Reaktionszeit von ca. 2- 5 Stunden. Das temperatur- und scherempfindliche PLA wird je nach Hersteller bei der Verarbeitung bis ca. 220 °C zu einem unterschiedlichen Zeitpunkt in einen Zweiwellenextruder überführt. In diesem Extruder erfolgt die Entfernung oder Neutralisierung des Katalysators. Vorhandenes Restmonomer wird abgeführt, um ein verarbeitungsstabiles PLA zu erhalten.

Erste Versuche eines derzeit praktikablen Herstellungsprozesses wurden in der Dissertation: "Darstellung von Polylactiden mittels reaktiver Extrusion", Fakultät für Verfahrenstechnik und technische Kybernetik der Universität Stuttgart, 2000, vorgelegt von Sven Jacobsen aus Esslingen am Neckar am 22.12.1999, gemacht. In der vorliegenden Arbeit ist zum ersten Mal die an sich bekannte Technologie der reaktiven Extrusion auf eine langsam ablaufende Polymerisationsreaktion angewandt worden. Die Veröffentlichung beschreibt ein Verfahrenskonzept zur alternativen Darstellung von Polylactid aus den zyklischen Dimeren der Milchsäure, dem Lactid, mit dessen Hilfe Polylactide hergestellt werden sollen. Als Polymerisationsaggregat wird dabei ein dichtkämmender, gleichsinnig drehender Zweischneckenextruder eingesetzt.

Leider hat sich dieses Konzept für eine kontinuierliche Ausbringung von PLA als nicht ausreichend erwiesen, was zur Folge hatte, dass der Extruder fast keine Ausbringung hatte. Bei dem Prozess wurden kleine unkontrollierte Mengen PLA erzeugt, jedoch mit nicht kontrollierbarer, ungleichmäßiger Qualität.

In EP 0 786 485 B1 wird ein kontinuierliches Verfahren für die aktivierte anionische Lactampolymerisation beschrieben. Die einzelnen Verfahrensschritte sind das Zuführen von Lactam sowie Katalysator und Aktivator für die anionische Lactampolymerisation, unter wasserfreien Bedingungen zu einer heizbaren kontinuierlich arbeitenden Misch- und Fördereinrichtung. Es erfolgt das Aufheizen des Lactams auf die Verfahrenstemperatur unter kontinuierlichem Mischen der Schmelze und mindestens teilweiser Polymerisation. Anschließend erfolgt eine kontinuierliche Formgebung in einem Werkzeug oder Austragen der Schmelze als Strang, Kühlung und Granulierung. Die Zuführung von Aktivator und Katalysator in eine wasserfreie Lactamschmelze erfolgt durch kontinuierliches Zudosieren eines Flüssigsystems, in dem Aktivator und Katalysator gemeinsam enthalten sind und welches bei Raumtemperatur flüssig ist, wobei das Flüssigsystem durch Umsetzung einer speziellen Mischung erhältlich ist. Im beschriebenen Verfahren wird einem Vorratsbehälter kontinuierlich reines, wasserfreies Lactam unaufgeschmolzen oder als Schmelze entnommen und einer kontinuierlich arbeitenden Förder- und Schmelzgemisch-Vorrichtung mit mehreren Behandlungszonen, bevorzugt einem Doppelwellenextruder mit gleichlaufenden Schnecken, zugeführt. Somit wird entweder die Schmelze des Lactams kontinuierlich gemischt und gefördert oder dieses zunächst kontinuierlich aufgeschmolzen, gemischt und gefördert.

In EP 737 219 B1 soll eine Polylactidzusammensetzung erhalten werden, die eine gute Schmelzfestigkeit und Dehnung aufweist. Es soll eine Zusammensetzung angegeben werden, die eine Schmelzfestigkeit aufweist, die hoch genug ist, damit selbst Folien durch konventionelle Verarbeitungsverfahren, insbesondere durch Blasfolienverfahren hergestellt werden können. Es wird eine verarbeitbare Polylactidzusammensetzung mit einem Molekulargewicht im Zahlenmittel von wenigstens 10000 angegeben, wobei sie durch die reaktive Extrusion des Polylactides mit einem organischen Peroxid erhältlich ist. Dies soll das Folienblasen von Polylactiden unter Verwendung einer konventinellen, kommerziellen Folienblasanlage ermöglichen. Die Stabilisierung von Polymilchsäure wurde unter Verwendung eines Brabendermischers untersucht, mit dessen Hilfe es möglich gewesen sei, die Schmelzviskosität der Verbindung von der Drehung der Maschine direkt aufzuzeichnen. Blasfolien mit unterschiedlichen Graden von Polylactid wurden durch einen Brabender-Extruder, dessen Schraubendurchmesser 19 mm und Länge 25 D waren, hergestellt. Der Extruder war mit einer Blasfoliendüse mit einem Durchmesser von 25 mm und einem Düsenzwischenraum von 1,0 mm versehen. Das Temperaturprofil in dem Extruder wurde auf 170-180-190°C und in der Düse auf 190°C eingestellt. Die Schraubengeschwindigkeit wurde auf 30 Upm eingestellt. Das hergestellte PLA wird im angegebenen Extruder gemischt und weiterverarbeitet.

EP 2 209 832 B1 beschreibt ein Verfahren zur Herstellung von Polymilchsäuren hoher Molmasse und hoher optischer Reinheit durch selektive Katalyse. Zumindest in einer Verfahrensstufe werden ein partikulärer Katalysator und/oder ein partikulärer Stabilisator, die jeweils einen mittleren Partikeldurchmesser von 1 bis 100 nm aufweisen, in einem heterogenen Reaktionsgemisch eingesetzt. Für die kontinuierliche Massepolymerisation des L,L-Dilactids in Form eines Reaktivextrusionsprozesses wurde ein dichtkämmender, gleichsinnig drehender Doppelschneckenextruder mit Innentemperatur- und Drehmomentregelung verwendet, der eine modular aufgebaute Schnecke besitzt, um flexibel die Schneckenkonfigurierung hinsichtlich Transport-, Knet- und Stauelementen den Prozessbedingungen und Endproduktparametern optimal anpassen zu können.

Im praktischen Betrieb hat sich erwiesen, dass Doppelschneckenextruder für die effektive Herstellung von PLA ungeeignet sind, da diese lediglich ein Schmelzen der zu verarbeitenden Mischungen bewirken. Der eigentliche Polymerisationsprozess erfolgt dabei durch die verwendeten Ausgangs- und Zusatzstoffe, nicht durch den Extruder selbst. Die Funktionsweise von Einschnecken- oder Doppelschneckenextruder, deren Durchlaufzeiten und die beim Durchlauf einstellbaren Drücke sind für eine effektive PLA-Herstellung ungeeignet.

Nach den bekannten Verfahren hergestelltes PLA schwankt in seinen Eigenschaften erheblich. Bekannte Verfahren sind nicht ausreichend in allen Phasen steuerbar, um kontinuierlich und sicher qualitätsgerechtes PLA herzustellen. Somit ist das derart hergestellte Produkt nur äußerst eingeschränkt nutzbar. Die Herstellung erfolgt meist in unwirtschaftlichen Intervallverfahren, so im Bulk-Verfahren. Die Materialeigenschaften sind während des Herstellungsprozesses nur äußerst mangelhaft oder nicht zu beeinflussen. Große, auf einmal anfallende Mengen sind sofort weiterzuverarbeiten.

Bei der PLA-Herstellung läuft der sogenannte Ringöffnungsprozess ab. Am Behandlungsbeginn öffnet sich der Laktatring. Das heißt, an der Öffnungsstelle können chemische Reaktionen stattfinden. Dieses Öffnen geschieht in einem sogenannten Zeitfenster. Bei längerer Verweilzeit, beispielsweise in einem Doppelschneckenextruder, beginnt sich der Öffnungsprozess umzukehren. Das heißt, es entstehen wieder die Ausgangsstoffe.

Planetwalzenextruder wurden bisher dagegen lediglich für Mischprozesse in der Kunststoffindustrie, in der Farbenindustrie zur Herstellung von Farbmischungen, in der chemische Industrie zur Herstellung von Mischungen mit endothermen und exothermen Reaktionen, in der Lebensmittelindustrie zur Herstellung von empfindlichen Rezepturen oder zu anderweitigen Mischprozessen eingesetzt. Mit Planetwalzenextrudern lassen sich selbst Materialmischungen mit hohen Viskositätsunterschieden problemlos verarbeiten.

Eine Besonderheit ist die mögliche modulare Bauweise des Planetwalzenextruders. Bei der modularen Bauweise werden mehrere Walzenzylinder hintereinander gekoppelt und somit der Verfahrensweg vervielfacht bzw. die Verfahrenstechnik den jeweiligen Erfordernissen angepasst. Hierdurch hat der Planetwalzenextruder, im Gegensatz zu anderen herkömmlichen Aufbereitungsextrudern, die Möglichkeit, ganze Prozessketten hintereinander zu schalten. Während eines Prozesses können mehrere Reaktionen, wie z. B. Entgasen, Flüssigkeiten einspritzen oder Füll- und Feststoffkomponenten zugeben, hintereinander ablaufen.

Die bekannten Planetwalzenextruder werden zum Mischen genutzt und die 'normalen' Extruder schmelzen etwas auf. Zum Beispiel würde der Massedruck am Ende herkömmlicher Planetwalzenextruders nicht ausreichen, um mit ihm Extrusionsblasformen zu betreiben.

Ein Planetwalzenextruder mit Sensoren für Druck- und Temperaturmessung sowie Kühl- und Heizeinrichtungen zur Steuerung der im Extruder ablaufenden Reaktionen wird beispielsweise in DE 197 20 916 A1 beschrieben. Der beschriebene Planetwalzenextruder dient der Verarbeitung von Kunststoff, wobei dieser in Granulatform zusammen mit Zuschlägen in den Extruder eingebracht wird. Die Einsatzmischung wird plastifiziert, homogenisiert, anschließend auf Extrusionstemperatur abgekühlt und im schmelzflüssigen Zustand wieder ausgetragen.

In DE 10 2017 005 998 A1 wird eine chemische Prozeßführung für fließfähiges Einsatzgut in einem Planetwalzenextruder beschrieben. Zur Verlängerung der Verweilzeit wird vorgeschlagen, ein festes Bewegungsspiel von mindestens 3 mm zwischen den verzahnten Teilen einzustellen oder den Extruder zu verlängern, wobei die Verlängerung durch mindestens einen weiteren Planetwalzenextruderabschnitt oder ein weiteres Planetwalzenextrudermodul gebildet wird. Eine Verweilzeitverlängerung soll auch dadurch erreichbar sein, dass eine der Förderrichtung des Extruders entgegen gerichteten Strömung erzeugt wird.

US 2014/296399 A1 offenbart ein Verfahren zur Herstellung einer Polymilchsäure-HarzZusammensetzung (PLA) aus einer Lactidmischung mittels Polymerisation, bei dem die zu verarbeitende Lactidmischung in einen Extruder eingeleitet, mit mindestens einem Katalysator versetzt und das fertige PLA am Ende entnommen wird.

Die WO 2009/141139 A1 betrifft ein Verfahren zur Herstellung von Biopolymeren, insbesondere zur Durchführung von Polymerisationsprozessen, insbesondere zur Homo- oder Copolymerisation von Biopolymeren sowie eine Vorrichtung dafür. Dabei werden Monomer(e) und/oder Katalysatoren und/oder Initiatoren einem rückgemischten Mischkneter, insbesondere mit einem Längen/Durchmesserverhältnis von 0,5 - 3,5, zugegeben, dem Produkt Wärme zugeführt und mit bereits reagiertem Produkt rückgemischt und das reagierte Produkt aus dem Mischkneter abgeführt.

Aufgabe der Erfindung ist es, ein Verfahren und eine Anlage zu entwickeln, dessen Verfahrensschritte derart steuerbar und dessen Anlagenteile derart anzuordnen sind, dass eine kontinuierliche Produktion von PLA gesichert wird. Der Herstellungsprozess soll in allen Phasen exakt in allen qualitätsbestimmenden Parametern beeinflussbar sein. Darüber hinaus sollen qualitativ hochwertige und jederzeit in den Eigenschaften von Kundenanforderungen anpassbare Produkte garantiert werden können.

Des Weiteren ist es Ziel der Erfindung, durch die optimale Gestaltung der Abläufe Primärenergie einzusparen. Durch die Bereitstellung von verspinnbarem PLA soll der exzessive Verbrauch natürlicher Ressourcen, wie Baumwolle mit hohem Wasserbedarf, reduziert werden. Darüber hinaus sollen Verpackungen, speziell für Lebensmittel, hergestellt werden können, die uneingeschränkt mit üblichem Aufwand, idealerweise industriell, kompostierbar sind. Das erfindungsgemäß hergestellte PLA soll auf weitestgehend herkömmlichen Maschinen und Anlagen weiterverarbeitet werden können.

Erfindungsgemäß wird die Aufgabe durch die Merkmale der Ansprüche 1 und 6 gelöst. Ausgestaltende Merkmale sind in den Unteransprüchen 2 bis 5 und 7 bis 10 beschrieben. Die Wahl eines geeigneten Planetwalzenextruders resultiert aus den Kenntnissen um den Reaktionsverlauf des PLA. In einem Planetwalzenextruder laufen mehrere chemische Prozesse nacheinander ab. Nach Einfüllen des PLA in flüssiger Form in den Reaktionsraum läuft die chemische Reaktion der Ringstrukturen in mehreren Schritten innerhalb eines sogenannten Reaktionsfensters ab. Zuerst öffnet sich die Ringstruktur des PLA. Diese Öffnung bleibt eine gewisse Zeit bestehen. Danach schließen sich die Strukturen wieder zum Ring. Es läuft also eine sogenannte umkehrbare Reaktion ab. Die Größe des Reaktionsfensters, also seine Dauer, sowie die Steilheit der Flanken des Fensters bestimmen die zur Verfügung stehende Reaktionszeit.

Es gilt, innerhalb dieses Fensters die Reaktion nach der Ringöffnung abzubrechen. Zum Bestimmen eines geeigneten Zeitpunktes sind alle relevanten Parameter, wie die Drücke, die Temperaturen und die Konsistenz des PLA an möglichst vielen Orten im Planetwalzenextruder zu erfassen. Das gelingt nur, wenn am Planetwalzenextruder und in seinem Inneren die entsprechenden Messgeräte und die Regulationsmöglichkeiten implementiert sind. Eine Regulierung der Verweildauer des PLA im System kann über die Variierbarkeit der Drehzahl der Zentralwalze erfolgen.

Die Zentralwalze des Planetwalzenextruders ist vielgängig und schraubenförmig verzahnt. Die Planeträder sind mit passender Verzahnung und mit deutlich geringerem Durchmesser im Verhältnis zum Durchmesser der Zentralwalze versehen. Letztendlich befinden sich in der Innenseite des Gehäusemantels des Planetwalzenextruders passende Verzahnungen, in denen die Planeträder abrollen und sich dort einstemmen. Mit der Drehbewegung der Zentralwalze werden über derer Verzahnungen die Planeträder in Rotation versetzt. Während dieser Drehbewegung wandern die Planeträder in der Verzahnung des Gehäusemantels gleichsinnig mit der Drehbewegung der Zentralwalze. Die Geschwindigkeit der Bewegung der Planeträder ist vom Verhältnis der Durchmesser von der Zentralwalze zu den Planeträdern abhängig.

Dem Einsatzzweck entsprechend ist die Form der Zahnungswendelung so angelegt, dass bei Drehbewegung der Zentralwalze sich zwischen den Planeträdern befindliches Material richtungsgebunden befördert wird.

Da in der beschriebenen Anlage an der Zuführleitung für die Lactidmischung zum Planetwalzenextruder das Reaktionsmaterial in flüssiger Form eingebracht wird und am Ende der Reaktionskette im weitesten Sinne pastös ausgetragen wird, müssen die Zahnspiele in den Segmenten unterschiedlich ausgeführt werden. So ist im ersten Segment nach dem Einfüllen in den Planetwalzenextruder der Spalt zwischen Zahnwendeln klein zu wählen, um Panschverluste zu minimieren. Mit zunehmender Zähigkeit des Reaktionsmaterials können in den folgenden Segmenten diese Spalten vergrößert werden. Die Zähne nehmen durch Klebeffekte leichter Material mit. Vor allem ist die Spaltdimension in diesem Bereich so zu wählen, dass die aufzuwendende Walkarbeit nicht zu groß wird. Durch intensive Walkarbeit, das heißt innere Reibung im Einsatzmaterial und an den Zahnflanken, entsteht Wärme. Diese Wärme und die gleichzeitig entstehende Wärme aus dem ablaufenden Ringöffnungsprozess des PLA muss qualifiziert aus dem Planetwalzenextruder ausgeleitet werden.

Um einen thermisch möglichst harmonischen, die beabsichtigten Reaktionen förderlichen Prozessablauf zu realisieren, ist an den zur Temperaturbeeinflussung geeigneten Orten in den Zonen der Segmente im Außengehäuse des Planetwalzenextruders eine Kühlung bzw. eine Heizung zu installieren. Auch in der Zentralwalze ist für die gleiche Wirkung eine Heizung bzw. eine Kühlung vorzusehen.

Da aber naturgemäß Temperaturänderungen auch Druckveränderungen bewirken, ist auch eine aktive, flexibel reagierende Drucksteuerung zu implementieren. Dabei ist zu beachten, dass aufgrund der pastösen Konsistenz des PLA auf den Zahnflanken ein gewisser Dichteffekt entsteht, sodass innerhalb eines Segmentes bzw. einer Zone zumindest temporär ein geschlossener Raum zwischen den dort bewegten Planeträdern entsteht, der drucktechnisch beeinflussbar ist.

Eine Heizung im Bereich des ersten Segmentes ist notwendig, um im Zusammenwirken mit dem Katalysator die beabsichtigte Reaktion in der Lactidmischung zu starten.

Eine vorteilhafte Möglichkeit der Beeinflussung der Reaktionsgeschwindigkeit besteht in der Wahl des Spaltmaßes zwischen den Zähnen von Zentralwalze, Gehäuseverzahnung und Planeträdern. Dort sollte ein Spaltmaß zwischen ca. 0,1 mm und 0,5 mm zur Vermeidung von Pansch- und Schöpfverlusten der Flüssigkeit und in Flussrichtung nach hinten produktabhängig nach Konsistenz immer größer werdend eingestellt werden. Aus der, dort so dünnen entstehenden Materialdicke, kann Gas leicht entweichen und der Katalysator wird optimal homogen im PLA verteilt. Die Größe der Zähne und damit deren Anzahl bezüglich der Umfänge der Räder im System bestimmen die zur Verfügung stehende Größe der Reaktionsflächen. Im Gegensatz zu einem Doppelwellenextruder mit nur einem Knet- und Walkbereich zwischen den Wellen, verfügt der Planetwalzenextruder über eine Vielzahl von Knet- und Walkbereichen entsprechend der Anzahl der Planeträder.

So ist beispielsweise bei vergleichbaren Durchmessern, Zahndimensionen und Längen die Oberflächendifferenz erheblich. Die wirksame Oberfläche bei einem Doppelwellenextruder mit Systemdurchmesser ca. 100 mm und einer Länge von 500 mm beträgt ca. 200 m², bei einem Planetwalzenextruder mit beispielsweise 8 Planeträdern ca. 440 m². Dieser Vergleich zeigt die Differenzen deutlich. Des weiteren verringern sich im Planetwalzenextruder die Abstände der Planeträder untereinander gravierend. Die Achsabstände zwischen den Planetwalzen sind auf ein Mindestmaß abgemindert, und zwar so weit, dass sich die Walzen gerade noch frei aneinander vorbei drehen können. Diese Auslegung garantiert in allen Bereichen des Planetwalzenextruders ein intensives Durchmischen des Laktats. Da sich im Planetwalzenextruder die Planetwalzen über ihre Verzahnung auf der Innenverzahnung des Extrudergehäuses abstützen können und damit die Zentralwalze zentrieren, werden im geometrischen System die Kräfte gleichmäßig verteilt. Daraus resultieren in allen Bereichen der Zahnpaarungen exakt einstellbare Spaltmaße.

Bei dem Verfahren zur Herstellung von Polylactid (PLA) aus einer Lactidmischung, hauptsächlich aus D-Lactid und L-Lactid mittels Polymerisation, wird die zu verarbeitende Lactidmischung in einen Planetwalzenextruder eingeleitet, mit einem Katalysator versetzt und das fertige PLA am Ende entnommen. Die Lactidmischung durchläuft kontinuierlich mehrere Segmente eines modular aufgebauten Planetwalzenextruders. In den Segmenten erfolgt eine Messung und gezielte Steuerung des im Planetwalzenextruder ablaufenden Reaktionsverlaufes derart, dass in Abhängigkeit über Sensoren zu prüfender Temperaturwerte die Temperatur mittels einer Heizung und/oder Kühlung einstellbar ist. In Abhängigkeit über Sensoren zu prüfender Druckwerte ist der Druck über einen steuerbaren Gasabzug und/oder eine steuerbare Extrudergeschwindigkeit und/oder eine statische Veränderbarkeit der Planetwalzen und/oder eine veränderbare Dosiergeschwindigkeit der Lactidmischung und/oder einem veränderbaren Mischungsverhältnis der Lactidmischung einstellbar. Mindestens in einem Teilbereich des Planetwalzenextruders erfolgt in einer explosionsgeschützten Zone ein Gasabzug von feuergefährlichem Gas. Während des Wälzprozesses erfolgt eine Zuführung von mindestens einem Katalysator direkt in den Planetwalzenextruder. Während des Wälzprozesses erfolgt auch die Zuführung von Additiven zur Beeinflussung der Endeigenschaften direkt in den Planetwalzenextruder.

Die Geometrie der Planetwalzen, die Drücke und Temperaturen im Planetwalzenextruder müssen in Abhängigkeit des Reaktionsfensters bei fortschreitendem Behandlungsverlauf so angepasst werden, dass eine kontrollierbare Ringpolymerisation stattfinden kann.

In einer besonderen Ausführung durchläuft die Lactidmischung in Längsrichtung des Planetwalzenextruders mehrere Zonen eines Segmentes des Planetwalzenextruders. In den Zonen erfolgt eine Messung und gezielte Steuerung des im Planetwalzenextruder ablaufenden Reaktionsverlaufes derart, dass in Abhängigkeit über Sensoren zu prüfender Temperaturwerte die Temperatur mittels einer Heizung und/oder Kühlung einstellbar ist und/oder der Druck über einen steuerbaren Gasabzug und/oder eine veränderte Dimensionierung der Planetwalzen einstellbar ist. Je nach beabsichtigtem Druckverlauf im Planetwalzenextruder werden die Planetwalzen dabei in ihrem Durchmesser so angepasst, dass mit fortschreitender Behandlungsdauer in Flussrichtung des Materials die Spalten zwischen Planetwalzen und der Behälterwandung größer bzw. kleiner gewählt werden.

In einer weiteren Ausführung durchläuft die Lactidmischung im Umfang des Planetwalzenextruders mehrere Zonen eines Segmentes des Planetwalzenextruders. In den einzelnen Zonen erfolgt eine Messung und gezielte Steuerung des im Planetwalzenextruder ablaufenden Reaktionsverlaufes derart, dass in Abhängigkeit über Sensoren zu prüfender Temperaturwerte die Temperatur mittels einer Heizung und/oder Kühlung einstellbar ist. Eine Steuerung des Reaktionsverlaufes kann auch dadurch erfolgen, dass in Abhängigkeit über Sensoren zu prüfender Druckwerte der Druck über einen steuerbaren Gasabzug einstellbar ist.

Nach der Zuführung eines oder mehrerer Katalysatoren können als Additive zur Beeinflussung der Endeigenschaften Farbe und/oder Füllstoffe (z.B. Talkum, Fasern) zugesetzt werden.

Eine Zuführung eines Neutralisators sollte vorzugsweise gegen Prozessende direkt in den Planetwalzenextruder erfolgen.

Das feuergefährliche Gas aus der Absaugung wird einer Entsorgung oder Weiterverwertung zugeführt. Die explosionsgeschützte Zone kann mit einem trockenen Inertgas beaufschlagt werden. Es kann auch ein Vakuum oder zumindest geringerer Luftdruck angelegt werden. Damit werden die explosiven Gase in diesem Raum unter ihre Zündgrenze verdünnt.

Bei der Anlage zur Durchführung des erfindungsgemäßen Verfahrens ist mindestens ein Vorratsbehälter mit einer Lactidmischung über eine Zuführleitung mit dem Planetwalzenextruder verbunden. Der Planetwalzenextruder ist derart modular aufgebaut, dass er in mehrere Segmente mit jeweils mehreren um eine Zentralwalze umlaufenden Planetwalzen unterteilt ist. Dabei befinden sich zwischen den einzelnen Segmenten Zwischenräume und zwischen den Planetwalzen und dem Extrudergehäuse sowie zwischen den Planetwalzen und der Zentralwalze jeweils Spalten, in die wahlweise mindestens eine Zuführung für Katalysator und/oder mindestens eine Zuführung von Additiven und/oder mindestens eine Zuführung von Neutralisator und/oder mindestens ein Gasabzug für feuergefährliches Gas mündet. In Flussrichtung des zu behandelnden Materials vergrößern sich die Spalten von Segment zu Segment.

Mindestens ein Teilbereich des Planetwalzenextruders weist eine explosionsgeschützte Zone auf, aus der ein Gasabzug von feuergefährlichem Gas aus den Zwischenräumen und/oder den Spalten erfolgt. Die explosionsgeschützte Zone überdeckt den Bereich, in dem feuergefährliche Gase entstehen und abgezogen werden.

Am und/oder im Planetwalzenextruder ist in jedem der Segmente jeweils eine Sensorik zur Datengewinnung angeordnet. Dabei ermöglicht eine Sensorik zur Prüfung von Temperaturwerten eine Beeinflussung der Temperatur im Planetwalzenextruder derart, dass mittels einer Heizung und/oder Kühlung die Temperatur in den Segmenten des Planetwalzenextruders einstellbar ist. Eine Sensorik zur Prüfung von Druckwerten ermöglicht eine Beeinflussung des Druckes im Planetwalzenextruder derart, dass mittels einer steuerbaren Gasabsaugung und/oder einer steuerbaren Extrudergeschwindigkeit und/oder einer statischen Veränderbarkeit der Planetwalzen und/oder einer veränderbaren Dosiergeschwindigkeit der Lactidmischung und/oder einem veränderbaren Mischungsverhältnis der Lactidmischung der Druck in den Segmenten des Planetwalzenextruder variabel einstellbar ist.

Der Planetwalzenextruder ist flüssigkeits- und gasdicht ausgebildet. Das entstandene Polylactid ist aus einer Austrittsöffnung entnehmbar.

In einer besonderen Ausführung ist mindestens eines der Segmente in Längsrichtung des Planetwalzenextruders in mehrere Zonen unterteilt. In jeder Zone ist eine Sensorik zur Datengewinnung angeordnet. Eine Sensorik zur Prüfung von Temperaturwerten ermöglicht eine Beeinflussung der Temperatur derart, dass mittels einer Heizung und/oder Kühlung die Temperatur in den einzelnen Zonen einstellbar ist. Eine Sensorik zur Prüfung von Druckwerten kann eine Beeinflussung des Druckes derart ermöglichen, dass mittels eines steuerbaren Gasabzuges und/oder einer statischen Veränderbarkeit der Planetwalzen der Druck in den Segmenten des Planetwalzenextruder variabel einstellbar ist.

In einer weiteren Ausführung ist mindestens eines der Segmente im Umfang des Planetwalzenextruders in mehrere Zonen unterteilt. In jeder Zone kann eine Sensorik zur Datengewinnung angeordnet sein, wobei eine Sensorik zur Prüfung von Temperaturwerten eine Beeinflussung der Temperatur derart ermöglicht, dass mittels einer Heizung und/oder Kühlung die Temperatur in den einzelnen Zonen einstellbar ist. Eine weitere Sensorik zur Prüfung von Druckwerten kann eine Beeinflussung des Druckes derart ermöglichen, dass mittels eines steuerbaren Gasabzuges der Druck in den Zonen des Planetwalzenextruder variabel einstellbar ist.

Die explosionsgeschützte Zone kann durch eine gesonderte Umhausung gebildet werden. Innerhalb der explosionsgeschützten Zone sollten alle enthaltenen Komponenten explosionsgeschützt ausgeführt sein, beispielsweise die Heizung, die Messmittel oder die Absaugung.

Die Verfahrensschritte werden neu geordnet, Abläufe harmonisiert und entsprechend geeignete Anlagen verwendet. Erstmals werden alle prozess- und qualitätsrelevanten Parameter und Daten mittels einer Vielzahl geeigneter Sensoren an verschiedenen, aber entscheidenden Orten an und in den Anlagen gewonnen. Diese Daten werden zentral verarbeitet und dienen der Steuerung der Gesamtanlage. Somit kann durch eine sensible und flexible Steuerung wirtschaftlich ein marktfähiges Produkt erzeugt werden. Da der anlagentechnische Aufwand und energetische Aufwand im Verhältnis zu bisher bekannten Verfahren sehr gering ist, können Erweiterungen leicht und kostengünstig durch Vervielfachung der Anlagen realisiert werden.

Erfindungsgemäß ist es erstmals möglich, PLA mit exakt definierten Eigenschaften kontinuierlich in einem fortlaufenden Prozess energiesparend herzustellen. Durch gezielte Veränderungen der Prozessparameter oder die Zugabe von weiteren Materialien können die Eigenschaften während des Herstellungsprozesses kurzfristig verändert werden. Durch die so erreichte Produkt- und Produktionsflexibilität wird die Wirtschaftlichkeit der Anlage gesichert und Energie eingespart.

Nachfolgend wird die Erfindung an einem Ausführungsbeispiel näher erläutert. Es zeigen:
- Fig. 1: Anlage zur Herstellung von PLA
- Fig. 2: Planetwalzenextruder
- Fig. 3: schematischer Schnitt A-A
- Fig. 4: Schnitt B-B

Die Anlage ist dafür konzipiert, bei der Herstellung von PLA schwer abbaubare organische Spurenstoffe mithilfe einer In-situ-Erzeugung und Übertragung von hydroxylradikalen Ozon und anderen Spezies mit ungepaarten Bindungen auf die wässrige Phase abzubauen. Die Anlage ist für eine Jahresproduktion von 500 bis 1.000 t dimensioniert. Diese Von-Bis-Spanne beschreibt die Möglichkeit, Endprodukte unterschiedlicher Gebrauchseigenschaften herzustellen. Dem entsprechend sind die Einzelkomponenten dimensioniert.

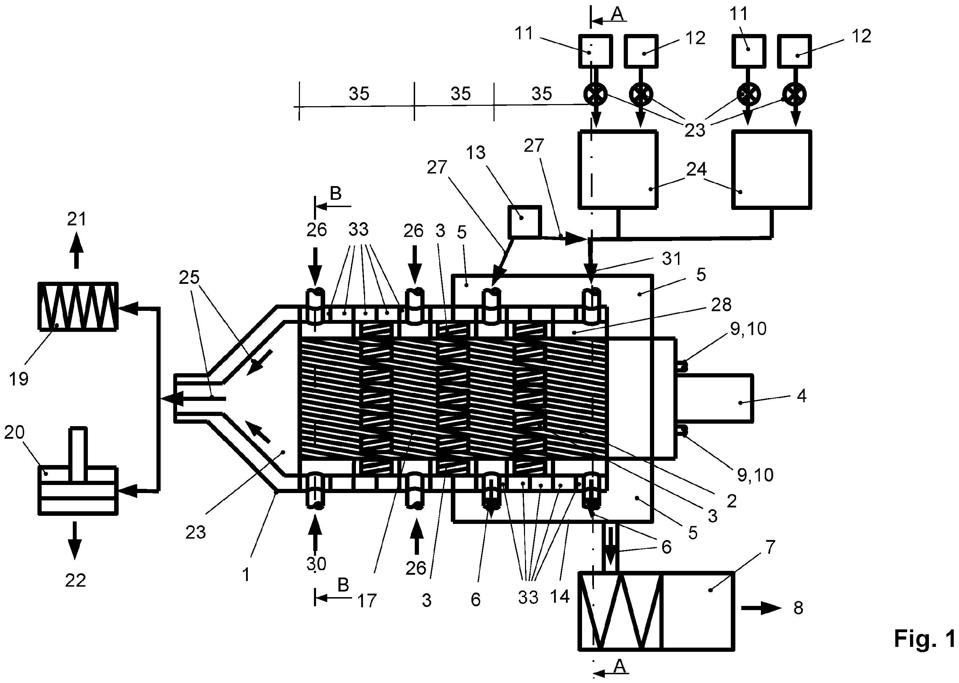

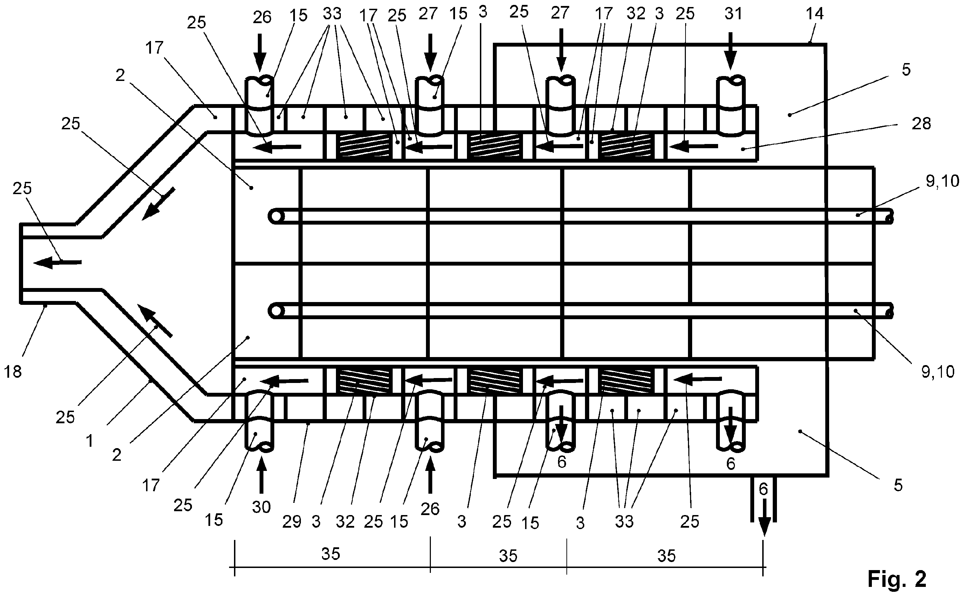

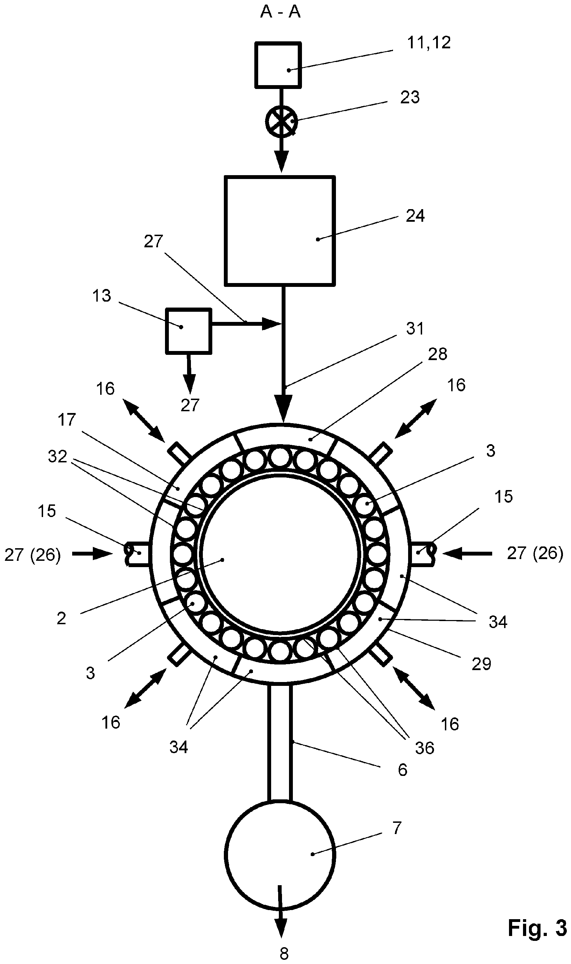

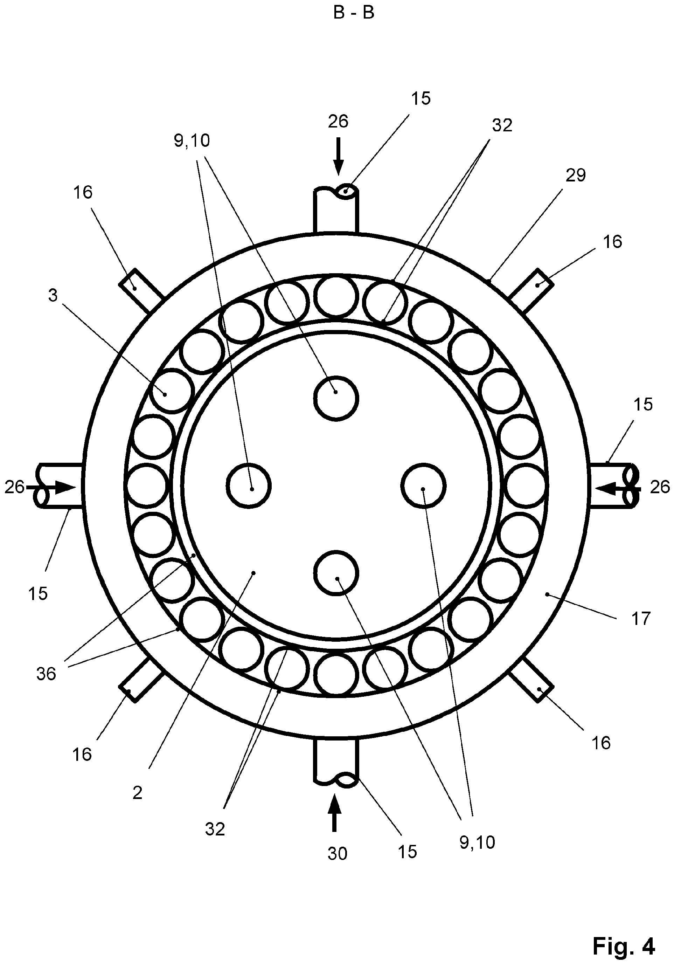

Die Fig. 1 zeigt schematisch in einer seitlichen Ansicht die Anlagen mit Stoffwegen und Verfahrensschritten zur Herstellung von PLA. In Fig. 2 werden in einer seitlichen Ansicht die Bauteile und die technischen Komponenten des eingesetzten Planetwalzenextruders 1 dargestellt. Fig. 3 und 4 zeigen in einer Schnittansicht den schematischen Aufbau des Planetwalzenextruders.

Ausgangspunkt der Behandlung sind die zur Anlage gehörenden zwei Vorratsbehälter 24 mit integrierter Kühlung, in die mittels als Pumpen ausgebildete Dosiereinrichtungen 23 D-Lactid aus Vorratsbehältern 11 und L-Lactid aus Vorratsbehältern 12 eingebracht werden. Des Weiteren ist ein Vorratsbehälter 13 mit einem Katalysator 27 vorgesehen, wobei im vorliegenden Beispiel eine Leitung mit Katalysator 27 nach dem Vorratsbehälter 24 mit der Lactidmischung und mehrere Leitungen mit Katalysator 27 direkt in verschiedene Segmente 35 des Planetwalzenextruders 1 münden. Jede Förderpumpe im Transportweg unterstützt den Einmischvorgang des Katalysators und eine Homogenisierung der Lactidmischung.

Zur Herstellung von PLA wird als Kern der Anlage ein Planetwalzenextruder 1, nachfolgend auch PWE genannt, eingesetzt, bei dem sich um eine mittels Antrieb 4 angetriebene Zentralwalze 2 mehrere Planetwalzen 3 bewegen. An der Zentralwalze 2 sind Mittel zur Heizung 9 und zur Kühlung 10 bzw. einer Temperierung vorgesehen, die sich auch über den weiteren Verlauf des PWA 1 fortsetzen können. Die geometrische Dimensionierung der Zentralwalze 2 mit seinen integrierten Heizungen 9 und Kühlungen 10 ist entsprechend der entstehenden Torsions- und Reibungskräfte und der Kraft des Antriebs 4 in der Regel als Elektromotor ausgebildet. Damit wird ein exzellenter Drehzahlgleichlauf erreicht. So ist für diese Dimensionierung eine Antriebsleistung von 50 kW bis 60 kW für den Antrieb der zentralen Welle erforderlich, um eine konstante Drehzahl von zum Beispiel 200 U/min stabil zu gewährleisten.

Der Durchmesser der Zentralwalze 2 ist hier bei 800 mm festgelegt. Die Durchmesser der hier 24 Planetwalzen besitzen jeweils einen Durchmesser von 100 mm. Damit werden die Wirkoberflächen maximiert und die Zwischenräume 17 zwischen den Planetwalzen 3 klein gehalten. Die Spalten 32 zwischen den Zähnen der Zentralwelle 2 und den Zähnen der Planetwalzen 3 sind zur Effizienzsteigerung im ersten Segment auf 0,1 mm festgelegt. In den weiteren Segmenten variieren diese Spaltbreiten je nach geplanter Konsistenz und Zähigkeit zwischen 0,2 und 0,5 mm.

Die integrierten Heizungen 9 und Kühlungen 10 gewährleisten im Zusammenspiel mit den thermischen Regulatoren im Extrudergehäuse 29 einen möglichst fein steuerbaren Temperaturverlauf im Behandlungsprozess. Diese Steuerung reguliert bzw. harmonisiert auch indirekt die Partialdrücke im System. Die Temperaturmessung erfolgt bis 400° C mittels Digitalmessung. Die Temperierung der Anlage erfolgt für das Heizen mit 25-30 KW und für das Kühlen mit 60-80 kW. Als Temperiermittel wird Druckwasser mit bis zu 200° C und bis zu 10 bar Druck eingesetzt. Das sichert eine hohe Wirksamkeit und Reaktionsgeschwindigkeit der Heiz- und Kühlanlage.

Der Planetwalzenextruder 1 besitzt im abgebildeten Beispiel 3 Segmente. Zwischen den umlaufenden Planetwalzen 3 befinden sich Zwischenräume 17, von welchen mindestens zwei dem Gasabzug 6 von feuergefährlichem Gas aus einer explosionsgeschützten Zone 5 mittels einer Absaugpumpe 7 dienen. In der explosionsgeschützten Zone 5, hier des ersten Segmentes, erfolgt der Gasabzug 6 mit einer entsprechend dimensionierten Pumpe von etwa 80-100 m³/h. Der Antrieb dieser Pumpe ist mit 2,0 kW ausreichend bemessen. So sind ein sicherer Gasabzug und eine ausreichende Gasverdünnung gesichert.

Die Zuführleitung 31 für die zu verarbeitende Lactidmischung aus einem Vorratsbehälter 24 führt direkt in den ersten Zwischenraum 28 zwischen den umlaufenden Walzen 3 und der Wand des Extrudergehäuses 29.

In den Zwischenräumen 17 ist auch die Sensorik 16 zur Datengewinnung installiert. Weitere Zwischenräume 17 dienen der Möglichkeit der Zuführung 15 von eigenschaftsverändernden Additiven 26, beispielsweise einem Katalysator 27, einem Neutralisator 30 oder speziellen Füllstoffen sowie einer gesteuerten Kompression und Dekompression des PLA.

Die Gehäusewandungen des Planetwalzenextruders 1 besitzen Heiz- und Kühlzonen, die den Behandlungsprozess beeinflussen können und jeweils die notwendigen Bedingungen zur Verfügung stellen. Im Inneren der Zentralwalze 2 befinden sich ebenfalls Heiz- und Kühlzonen. Zumindest ein Teil des Planetwalzenextruders 1 ist explosionsgeschützt mit einer Umhausung 14 versehen. Dieser Bereich ist mit trockenem Inertgas abgedeckt.

Wichtig ist die exakte Steuerung der Zugabe eines Neutralisators 30 zur Beendigung der Wirkung des Katalysators 27. Diese sensible Dosierung in Menge und richtigem Zeitpunkt beeinflusst die Qualität des Endproduktes entscheidend.

Der Austrittsöffnung 18 des Planetwalzenextruders 1 in Flussrichtung 25 des Materials nachgeordnet sind entweder eine Pumpe 19 zum Weitertransport des PLA zur sofortigen Weiterverarbeitung 21 oder eine Zerkleinerung 20, beispielsweise eine Schere mit Kühlung zum sogenannten Kaltabschlag, d.h. zur Herstellung eines Granulates mit einer anschließenden Lagerung 22.

Alle technischen Auslegungen berücksichtigen, dass im Ablauf des Verfahrens im Normalbetrieb Drücke bis ca. 40 bar entstehen können. Mit einem Sicherheitsfaktor von 4 - 5 sind alle Anlagenteile bis 200 bar ausgelegt.

### Funktionsweise

Aus je einem Vorratsbehälter 11 mit D-Lactid und einem Vorratsbehälter 12 mit L-Lactid wird in einem definierten Verhältnis D-Lactid und L-Lactid in einen Vorratsbehälter 24 geleitet und dort zu einer Lactidmischung gemischt. Das Mischungsverhältnis ist vom geplanten Endprodukt abhängig. Das Temperaturniveau in den Vorratsbehältern darf die Grenze von 220° C nicht überschreiten. Mindestens ein Teil des Katalysators 27 aus dem Vorratsbehälter 13 wird nach dem Vorratsbehälter 24 der Laktidmischung in die Zuführleitung 31 der Laktidmischung gegeben. Der Katalysator 27 ist in Monomer und Polymer gut löslich.

Aus dem Vorratsbehälter 24 wird die Lactidmischung über eine Zuführleitung 31 in den ersten Zwischenraum 28 des Planetwalzenextruders 1 übergeführt. In diesem Bereich werden alle eingetragenen Komponenten im Sinne einer Homogenisierung gründlich gemischt und möglichst gleichmäßig verteilt. Der Einzugsbereich ist wasser- bzw. flüssigkeitsdicht ausgeführt. Die eingetragene Lactidmischung liegt in dünnflüssiger Konsistenz vor. Eine Ausnahme kann die Konsistenz des Katalysators sein. Da sein Anteil am Gesamtvolumen gering ist, beeinflusst diese abweichende Viskosität nur höchst unwesentlich die Gesamtviskosität der Gesamtmasse. Im anschließenden Teilprozess entstehen brennbare Gase. Deshalb findet dieser in einer explosionsgeschützten Zone 5 statt. Der Explosionsschutz wird mittels Zufuhr von Inertgas, entweder Stickstoff oder CO₂, unterstützt. In einer weiteren Ausführung kann ein atmosphärischer Unterdruck eingestellt werden. Dadurch werden die gefährlichen Gase so weit verdünnt, dass sie kein zündfähiges Gemisch bilden können. Die feuergefährlichen Gase werden über einen Gasabzug 6 abgesaugt und einer energetischen Weiterverwertung oder Entsorgung 8 zugeführt.

Da die Profilierungen der Zentralwalze 2 und der Planetwalzen 3 derart ausgelegt sind, dass sie auch Material richtungsgebunden in Flussrichtung 25 transportieren, wird das PLA stets von einem Walzensystem über die Zwischenräume 17 zum nächsten Walzensystem befördert.

In den ersten Bereichen sind die Verzahnungen im Getriebesystem mit engen Toleranzen versehen, um Pansch- und Schöpfverluste zu minimieren. Die Zahnspalte zwischen den Verzahnungen 36 sind vorzugsweise und abhängig vom Durchmesser der zentralen Walze 2 im Verhältnis von etwa 1 : 1000 gewählt. Die so eng gewählten Spaltmaße erfüllen einen weiteren Zweck. Sie schaffen sehr große und dünne Oberflächen des Eintragsgutes. Diese folienartig vorstellbaren Oberflächen können so thermisch leicht beeinflusst werden und leicht entgasen. Diese geometrisch derartig knapp bemessenen Hohlräume, wie der erste Zwischenraum zwischen Walzen und Gehäusewand, bedingen eine Zuführung der Lactidmischung an mehreren Orten im Umfang des Extrudergehäuses 29 in der explosionsgeschützten Zone 5. So wird schon in diesem ersten Segment 35 intensiv gemischt und homogenisiert.

Im ersten und auch im folgenden Segment 35 entstehen in der Anlage brennbare Gase. Diese werden durch sogenannte Gasabzüge 6, welche vorteilhafterweise über den Umfang des Segments 35 und in Längserstreckung im Gehäuse des PWE verteilt sind, sicher abgeführt. Zusätzlich werden zur Sicherung eines gefahrlosen Betriebes mindestens die ersten Segmente 35, in der Regel zwei, explosionsgeschützt ausgeführt.

An den ersten Segmenten schließen sich weitere Segmente 35 an. Sie dienen mehreren und auch unterschiedlichen Zwecken. Dazu sind die Spaltmaße zwischen den Verzahnungen 36 der zunehmenden Viskosität des Einsatzmaterials entsprechend auf ein Verhältnis von ca. 1 : 500 vergrößert. Mit zunehmender Viskosität wächst im System der Grad innerer Reibung. Diese darf nicht zu übermäßiger Erwärmung führen. Wenn diese entstehende Reibungswärme nicht gleichmäßig verteilt würde, könnten chemische Reaktionen zumindest in Bereichen ungleich schnell ablaufen. Ein solches Verhalten ist unerwünscht und zu vermeiden. In diesen Segmenten läuft der sogenannte Ringöffnungsprozeß innerhalb von etwa 3 bis 15 Minuten ab. Die exakte Reaktionsdauer ist von den eingesetzten Katalysatoren 27 abhängig. Dieser Ringöffnungsprozeß ist reversibel, d.h. er muss gezielt abgebrochen werden. Das geschieht durch Zugabe von Neutralisatoren 30, die den Katalysator 27 binden. In den Segmenten 35 oder zwischen den einzelnen Segmenten 35 sind Zwischenräume 17 als Beruhigungszonen angeordnet. In diesen befinden sich eine Sensorik zur Datengewinnung 16 zur Messung von Temperatur und Druck sowie Anschlüsse zur Kühlung oder Heizung sowie Anschlüsse als Zuführung 15 von Additiven 26.

Die Anzahl der Segmente 35 in diesem Bereich des PWE richtet sich auch nach der Art der Additive 26 und deren Anteilsmengen am Gesamtvolumen. Erstmals wird Katalysator 27 erst in den ersten Segmenten 35 des PWE feindosiert zugegeben.

Das letzte Segment 35 dient vor allem der Harmonisierung des Laktids. In ihm oder im Zwischenraum 17 vor ihm, ist die Ringöffnungsreaktion beendet. Das Produkt wird stabilisiert. Das geschieht vor allem mittels Kühlung in den Zonen 33 und 34 um den Zwischenraum 17 und um dieses letzte Segment 35. Diesem letzten Segment 35 nachgeordnet ist eine Dosiereinrichtung 23. Sie sammelt die austretenden Einzelstränge und führt sie einer geeigneten Weiterverarbeitung 21 oder Lagerung 22 zu.

Die Zwischenräume 17 sind auch für die Steuerung des Prozessablaufs und die Beeinflussung der Produktqualität erforderlich. Es werden an diesen Orten Prozessdaten für die Steuerung abgeleitet und erwünschte zusätzliche Materialkomponenten beigefügt. Die Zwischenräume 17 dienen als Kompressions- und Dekompressionszonen. Darüber hinaus sind die Zwischenräume derartig strukturiert und unterteilt, dass einzelne Segmente der Zwischenräume höchst präzise temperiert werden können. Die Steuerung der Temperierung erfolgt über eine Prozesssteuerung. Diese Steuerung ermöglicht eine gezielte Heizung oder Kühlung einzelner Zwischenraumsegmente in programmierter Abfolge.

Bei einem Planetwalzenextruder 1 laufen mehrere Achsen um. Deren Dimensionen erlauben ihren Einsatz zur Kühlung des Reaktionsraumes. Gleichzeitig verlängern sich durch die vielfach strukturierten Einbauten die Wege und Reaktionszeiten im Reaktionsraum. Press- und Scherkräfte werden so erheblich reduziert.

Zur Sicherung der gewählten Produktqualität können ein oder mehrere Planetwalzenextruder 1, aneinandergereiht eingesetzt werden. Mittels dieser Technik können alle erforderlichen Prozessparameter detailliert gewählt und eingestellt werden, wie beispielsweise die Anordnung von Kompressions- und Dekompressionszonen. Der exakt gesteuerte Gasabzug 6 der entstehenden explosions- und brandgefährdenden Gase mittels einer Absaugpumpe 7 gewährleistet die nötige Prozesssicherheit. Von größter Wichtigkeit und prozessbestimmend ist die Steuerung der Verweilzeit des Reaktionsgutes im Planetwalzenextruder 1. So ist eine gesteuerte Verlängerung der Verweilzeit auf das 10 bis 15-fache bisher üblicher Verweilzeiten zwischen integrierten Kühl- und Temperierzonen qualitätsbestimmend. Der Polymerisationsprozess erfolgt zumindest in Teilbereichen der Anlagen zeit- und raumversetzt. Mit der speziellen Auslegung der Anlage wird diesen Bedingungen entsprochen. Diese hochflexible Variierbarkeit der Prozessbedingungen ermöglicht erst die erfindungsgemäße qualitätsgerechte Herstellung von PLA.

Der Temperatur- und Scherempfindlichkeit kann durch geeignete mehrstufige Kühlung 10 und größerer innerer Transportflächen der vielen Planetwalzen 3 mit geringeren spezifischen Pressdrücken und Reibung entsprochen werden. Aufgrund der längeren Wege im Planetwalzenextruder 1 und der somit verlängerten Verweilzeit und der deutlich größeren inneren Oberflächen ist eine schnellere und bessere Abtrennung von Restmonomeren erreichbar. In einem PWE ergeben sich geometrisch deutlich mehr Orte der Entnahme der Restmonomere. Eine Vielzahl der Entnahmemöglichkeiten ermöglicht eine sehr sanfte Entnahme von Monomeren, vor allem deren sehr gründliche Entfernung. Dazu ist in jedem Segment und jeder Zone mindestens ein Abzug vorgesehen.

Das entstandene Produkt kann, falls erwünscht, sofort beispielsweise mittels einer Pumpe 19 weiteren Nachfolgeprozessen zugeführt werden. Eine Möglichkeit besteht darin, mittels gekühlter Scheren eine Zerkleinerung 20 herbeizuführen und die geschnipselten Stücke einer Lagerung 22 zuzuführen.

Diese Art der Produktion gewährleistet eine kontinuierliche Produktqualität und Überwachung. Insbesondere eine qualifizierte kontinuierliche Temperatursteuerung in der Verbindung mit einem Vorreaktor vor dem Extruder sichert kontinuierlich hohe Produktqualität. Der Planetwalzenextruder 1 und der Vorratsbehälter 24 für die Lactidmischung sind explosionsgeschützt auszuführen, da die entstehenden brennbaren und explosiven Gase qualifiziert separiert und abgeführt werden müssen. Eine Schutzgasglocke aus Inertgas (CO2, N2 oder Ar) erhöht die Verfahrenssicherheit.

Die gesamte Anlage mit allen vor- und nachgeordneten Bauteilen wird einer üblichen Steuerung gesteuert. Diese Prozeßsteuerung erfasst alle prozeßrelevanten Daten mit der nötigen Geschwindigkeit, wertet sie aus und steuert entsprechend des Programms die Details des Fertigungsregimes. Dementsprechend sind alle Steuereinheiten, wie Thermometer, Manometer, Förderpumpen und Ventile, für eine digitale Steuerung ausgelegt. Auf einem zentralen Display werden alle relevanten Prozeßdaten aussagesicher angezeigt. Die vorteilhafterweise visualisierte Darstellung der Prozeßabläufe, Daten und Parameter erleichtert das Verständnis für diese Technologie und erhöht die Bediensicherheit.

Die Umstellzeiten bei einem Derivatwechsel werden mit der hier beschriebenen kontinuierlichen Verfahrensweise erheblich verkürzt und es lassen sich wirtschaftlich auch wesentlich kleinere Losgrößen produzieren als im Bulk-Verfahren, bei dem bereits im Vorratsbehälter 24 Katalysatoren zugegeben werden müssen. Durch seine spezielle inneren Geometrien sowie des Zuwachses an inneren Oberflächen und der Vielzahl umlaufender Planetwalzen verlängert sich die Verweilzeit und das Material wird sanfter verarbeitet.

### Bezugszeichenliste

- 1: Planetwalzenextruder (PWA)
- 2: Zentralwalze
- 3: Planetwalzen
- 4: Antrieb der zentralen Walze
- 5: explosionsgeschützte Zone
- 6: Gasabzug
- 7: Absaugpumpe
- 8: Weiterverwertung oder Entsorgung des Gases
- 9: Heizung der zentralen Walze und Temperierung
- 10: Kühlung der zentralen Walze und Temperierung
- 11: Vorratsbehälter D- Lactid
- 12: Vorratsbehälter L- Lactid
- 13: Vorratsbehälter Katalysator
- 14: Umhausung
- 15: Zuführung von Additiven
- 16: Sensorik zur Datengewinnung
- 17: Zwischenraum
- 18: Austrittsöffnung
- 19: Pumpe
- 20: Zerkleinerung mit Kühlung (Schere)
- 21: Weiterverarbeitung
- 22: Lagerung (Granulat)
- 23: Dosiereinrichtung
- 24: Vorratsbehälter mit Lactidmischung
- 25: Flussrichtung von Material
- 26: Additive
- 27: Katalysator
- 28: erster Zwischenraum zwischen Walzen und Gehäusewand
- 29: Extrudergehäuse
- 30: Neutralisator
- 31: Zuführleitung für Lactidmischung
- 32: Spalte
- 33: Zonen in Längsrichtung
- 34: Zonen im Umfang
- 35: Segment
- 36: Verzahnung

## Patentansprüche

1. Verfahren zur Herstellung von Polylactid (PLA) aus einer Lactidmischung mittels Polymerisation, bei dem die zu verarbeitende Lactidmischung in einen Extruder eingeleitet, mit mindestens einem Katalysator versetzt und das fertige PLA am Ende entnommen wird,
**dadurch gekennzeichnet, dass**
- die Lactidmischung mehrere Segmente (35) eines modular aufgebauten Planetwalzenextruders (1) kontinuierlich durchläuft, wobei in den Segmenten (35) Messungen und eine gezielte Steuerung des im Planetwalzenextruder (1) ablaufenden Reaktionsverlaufes derart erfolgt, dass in Abhängigkeit über Sensoren zu prüfender Temperaturwerte die Temperatur mittels einer Heizung und/oder Kühlung einstellbar ist und in Abhängigkeit über Sensoren zu prüfender Druckwerte der Druck über einen steuerbaren Gasabzug und/oder eine steuerbare Extrudergeschwindigkeit und/oder eine statische Veränderbarkeit der Planetwalzen und/oder eine veränderbare Dosiergeschwindigkeit der Lactidmischung und/oder ein veränderbares Mischungsverhältnis der Lactidmischung **variabel** einstellbar ist,
- mindestens in einem Teilbereich des Planetwalzenextruders (1) in einer explosionsgeschützten Zone (5) ein Gasabzug (6) von feuergefährlichem Gas erfolgt,
- eine Zuführung von mindestens einem Katalysator (27) während des Wälzprozesses direkt in den Planetwalzenextruder (1) erfolgt,
- eine Zuführung von Additiven (26) zur Beeinflussung der Endeigenschaften während des Wälzprozesses direkt in den Planetwalzenextruder erfolgt.

2. Verfahren nach Anspruch 1, **dadurch gekennzeichnet, dass** die Lactidmischung in Längsrichtung des Planetwalzenextruders (1) mehrere Zonen (33) eines Segmentes (35) des Planetwalzenextruders (1) durchläuft und in den Zonen eine Messung und gezielte Steuerung des im Planetwalzenextruder (1) ablaufenden Reaktionsverlaufes derart erfolgt, dass in Abhängigkeit über Sensoren zu prüfender Temperaturwerte die Temperatur mittels einer Heizung und/oder Kühlung einstellbar ist und/oder der Druck über einen steuerbaren Gasabzug (6) und/oder eine veränderte Dimensionierung der Planetwalzen (3) einstellbar ist.

3. Verfahren nach Anspruch 1, **dadurch gekennzeichnet, dass** die Lactidmischung im Umfang des Planetwalzenextruders (1) mehrere Zonen (34) eines Segmentes (35) des Planetwalzenextruders (1) durchläuft und in den Zonen (34) eine Messung und gezielte Steuerung des im Planetwalzenextruder (1) ablaufenden Reaktionsverlaufes derart erfolgt, dass in Abhängigkeit über Sensoren zu prüfender Temperaturwerte die Temperatur mittels einer Heizung und/oder Kühlung einstellbar ist und/oder in Abhängigkeit über Sensoren zu prüfender Druckwerte der Druck über einen steuerbaren Gasabzug (6) einstellbar ist.

4. Verfahren nach einem der Ansprüche 1 bis 3, **dadurch gekennzeichnet, dass** nach der Zuführung des Katalysators (27) als Additive (26) zur Beeinflussung der Endeigenschaften Farbe und/oder Füllstoffe zugesetzt werden.

5. Verfahren nach einem der Ansprüche 1 bis 4, **dadurch gekennzeichnet, dass** eine Zuführung eines Neutralisators (30) gegen Prozessende direkt in den Planetwalzenextruder (1) erfolgt.

6. Anlage zur Durchführung eines Verfahrens nach einem der Ansprüche 1 bis 5, **dadurch gekennzeichnet, dass**
- mindestens ein Vorratsbehälter (24) mit einer Lactidmischung über eine Zuführleitung (31) mit dem Planetwalzenextruder (1) verbunden ist,
- der Planetwalzenextruder (1) derart modular aufgebaut ist, dass er in mehrere Segmente (35) mit jeweils mehreren um eine Zentralwalze (2) umlaufenden Planetwalzen (3) unterteilt ist, wobei sich zwischen den einzelnen Segmenten (35) Zwischenräume (17) und zwischen den Planetwalzen (3) und dem Extrudergehäuse (31) sowie zwischen den Planetwalzen (3) und der Zentralwalze (2) jeweils Spalten (32) befinden, in die wahlweise mindestens eine Zuführung für Katalysator (27) und mindestens eine Zuführung (15) von Additiven (26) und mindestens eine Zuführung von Neutralisator (30) und mindestens ein Gasabzug (6) für feuergefährliches Gas münden,
- in Flussrichtung (25) des zu behandelnden Materials sich die Spalten (32) von Segment (35) zu Segment (35) in Abhängigkeit der zu erwartenden Konsistenz des zu transportierenden Materials **vergrößern,**
- mindestens ein Teilbereich des Planetwalzenextruders (1) eine explosionsgeschützte Zone (5) aufweist, aus der ein Gasabzug (6) von feuergefährlichem Gas aus den Zwischenräumen (17) und/oder den Spalten (32) erfolgt,
- am und/oder im Planetwalzenextruder (1) in jedem der Segmente (35) jeweils eine Sensorik (16) zur Datengewinnung angeordnet **ist**, wobei
- eine Sensorik zur Prüfung von Temperaturwerten eine Beeinflussung der Temperatur im Planetwalzenextruder (1) derart **ermöglicht,** dass mittels einer Heizung (9) und/oder Kühlung (19) die Temperatur in den Segmenten (35) des Planetwalzenextruders (1) einstellbar ist, und
- eine Sensorik zur Prüfung von Druckwerten eine Beeinflussung des Druckes im Planetwalzenextruder (1) derart **ermöglicht,** dass mittels einer steuerbaren Gasabsaugung und/oder einer steuerbaren Extrudergeschwindigkeit und/oder einer statischen Veränderbarkeit der Planetwalzen (3) und/oder einer veränderbaren Dosiergeschwindigkeit der Lactidmischung und/oder einem veränderbaren Mischungsverhältnis der Lactidmischung der Druck in den Segmenten (35) des Planetwalzenextruder (1) variabel einstellbar **ist,**
- der Planetwalzenextruder flüssigkeits- und gasdicht ausgebildet ist,
- das entstandene Polylactid aus einer Austrittsöffnung (18) entnehmbar **ist.**

7. Anlage nach Anspruch 6, **dadurch gekennzeichnet, dass** mindestens eines der Segmente (35) in Längsrichtung des Planetwalzenextruders (1) in mehrere Zonen (33) unterteilt und in jeder Zone (33) eine Sensorik (16) zur Datengewinnung angeordnet ist, wobei
- eine Sensorik zur Prüfung von Temperaturwerten eine Beeinflussung der Temperatur derart ermöglicht, dass mittels einer Heizung (9) und/oder Kühlung (19) die Temperatur in den einzelnen Zonen (33) einstellbar ist, und
- eine Sensorik zur Prüfung von Druckwerten eine Beeinflussung des Druckes derart ermöglicht, dass mittels eines steuerbaren Gasabzuges (6) und/oder einer statischen Veränderbarkeit der Planetwalzen (3) der Druck in den Segmenten (35) des Planetwalzenextruder (1) variabel einstellbar ist.

8. Anlage nach Anspruch 6 und 7, **dadurch gekennzeichnet, dass** mindestens eines der Segmente (35) im Umfang des Planetwalzenextruders (1) in mehrere Zonen (34) unterteilt und in jeder Zone (34) eine Sensorik (16) zur Datengewinnung angeordnet ist, wobei
- eine Sensorik zur Prüfung von Temperaturwerten eine Beeinflussung der Temperatur derart ermöglicht, dass mittels einer Heizung (9) und/oder Kühlung (19) die Temperatur in den einzelnen Zonen (33) einstellbar ist, und
- eine Sensorik zur Prüfung von Druckwerten eine Beeinflussung des Druckes derart ermöglicht, dass mittels eines steuerbaren Gasabzuges (6) der Druck in den Zonen (34) des Planetwalzenextruder (1) variabel einstellbar ist,

9. Anlage nach Anspruch 6 bis 8, **dadurch gekennzeichnet, dass** die explosionsgeschützte Zone (5) durch eine Umhausung (14) gebildet wird.

10. Anlage nach einem der Ansprüche 6 bis 9, **dadurch gekennzeichnet, dass** innerhalb der explosionsgeschützten Zone (5) alle enthaltenen Komponenten explosionsgeschützt ausgeführt sind.

## Claims

1. Process for producing polylactide (PLA) from a lactide mixture by means of polymerization, where the lactide mixture to be processed is introduced into an extruder, and mixed with at least one catalyst and the finished PLA is taken off at the end,
**characterized in that**
- the lactide mixture passes continuously through a plurality of segments (35) of a planetary gear extruder (1) having a modular construction, where measurements and targeted control of the reactions proceeding in the planetary gear extruder (1) are carried out in the segments (35) in such a way that the temperature can be set by means of heating and/or cooling as a function of temperature values to be tested via sensors and the pressure can be set variably via a controllable offtake of gas and/or a controllable extruder speed and/or a static alterability of the planetary gears and/or an alterable metering rate of the lactide mixture and/or an alterable mixing ratio of the lactide mixture as a function of pressure values to be tested via sensors,
- an offtake (6) of gas which presents a fire hazard is carried out at least in a subregion of the planetary gear extruder (1) in an explosion-protected zone (5),
- at least one catalyst (27) is introduced directly into the planetary gear extruder (1) during the rolling process,
- additives (26) for influencing the final properties are introduced directly into the planetary gear extruder during the rolling process.

2. Process according to Claim 1, **characterized in that** the lactide mixture passes in the longitudinal direction of the planetary gear extruder (1) through a plurality of zones (33) of a segment (35) of the planetary gear extruder (1) and a measurement and targeted control of the reactions proceeding in the planetary gear extruder (1) is carried out in the zones in such a way that the temperature can be set by means of heating and/or cooling as a function of temperature values to be tested via sensors and/or the pressure can be set via a controllable offtake (6) of gas and/or an altered dimensioning of the planetary gears (3).

3. Process according to Claim 1, **characterized in that** the lactide mixture passes through a plurality of zones (34) of a segment (35) of the planetary gear extruder (1) within the planetary gear extruder (1) and a measurement and targeted control of the reactions proceeding in the planetary gear extruder (1) is carried out in the zones (34) in such a way that the temperature can be set by means of heating and/or cooling as a function of temperature values to be tested via sensors and/or the pressure can be set via a controllable offtake (6) of gas as a function of pressure values to be tested via sensors.

4. Process according to any of Claims 1 to 3, **characterized in that** color and/or fillers for influencing the final properties are added as additives (26) after introduction of the catalyst (27).

5. Process according to any of Claims 1 to 4, **characterized in that** a neutralizer (30) is introduced directly into the planetary gear extruder (1) toward the end of the process.

6. Plant for carrying out a process according to any of Claims 1 to 5, **characterized in that**
- at least one stock vessel (24) containing a lactide mixture is connected via a feed conduit (31) to the planetary gear extruder (1),
- the planetary gear extruder (1) has a modular construction such that it is divided into a plurality of segments (35) each having a plurality of planetary gears (3) running around a central gear (2), where intermediate spaces (17) are present between the individual segments (35) and gaps (32), into which, optionally, at least one feed conduit for catalyst (27) and at least one feed conduit (15) for additives (26) and at least one feed conduit for neutralizer (30) and at least one offtake (6) for gas which presents a fire hazard open, are in each case present between the planetary gears (3) and the extruder housing (31) and between the planetary gears (3) and the central gear (2),
- the gaps (32) from segment (35) to segment (35) increase in size in the flow direction (25) of the material to be treated as a function of the expected consistency of the material to be transported,
- at least one subregion of the planetary gear extruder (1) has an explosion-protected zone (5) from which gas which presents a fire hazard is taken off (6) from the intermediate spaces (17) and/or the gaps (32),
- sensors (16) for acquiring data are in each case arranged on and/or in the planetary gear extruder (1) in each of the segments (35), where
- sensors for testing temperature values make it possible to influence the temperature in the planetary gear extruder (1) in such a way that the temperature in the segments (35) of the planetary gear extruder (1) can be set by means of heating (9) and/or cooling (19), and
- sensors for testing pressure values make it possible to influence the pressure in the planetary gear extruder (1) in such a way that the pressure in the segments (35) of the planetary gear extruder (1) can be set variably by means of a controllable extraction of gas and/or a controllable extruder speed and/or a static alterability of the planetary gears (3) and/or an alterable metering rate of the lactide mixture and/or an alterable mixing ratio of the lactide mixture,
- the planetary gear extruder is liquid-tight and gastight,
- the polylactide formed can be taken off from an outlet opening (18).

7. Plant according to Claim 6, **characterized in that** at least one of the segments (35) is divided in the longitudinal direction of the planetary gear extruder (1) into a plurality of zones (33) and sensors (16) for acquiring data are arranged in each zone (33), where
- sensors for testing temperature values make it possible to influence the temperature in such a way that the temperature in the individual zones (33) can be set by means of heating (9) and/or cooling (19), and
- sensors for testing pressure values make it possible to influence the pressure in such a way that the pressure in the segments (35) of the planetary gear extruder (1) can be set variably by means of a controllable offtake (6) of gas and/or a static alterability of the planetary gears (3).

8. Plant according to Claim 6 or 7, **characterized in that** at least one of the segments (35) within the planetary gear extruder (1) is divided into a plurality of zones (34) and sensors (16) for acquiring data are arranged in each zone (34), where
- sensors for testing temperature values make it possible to influence the temperature in such a way that the temperature in the individual zones (33) can be set by means of heating (9) and/or cooling (19), and
- sensors for testing pressure values make it possible to influence the pressure in such a way that the pressure in the zones (34) of the planetary gear extruder (1) can be set variably by means of a controllable offtake (6) of gas.

9. Plant according to any of Claims 6 to 8, **characterized in that** the explosion-protected zone (5) is formed by an enclosing housing (14).

10. Plant according to any of Claims 6 to 9, **characterized in that** all components present within the explosion-protected zone (5) have an explosion-protection design.

## Revendications

1. Procédé de production de polylactide (PLA) à partir d'un mélange de lactides par polymérisation, procédé dans lequel le mélange de lactides à traiter est introduit dans une extrudeuse et mélangé à au moins un catalyseur et le PLA fini est retiré à la fin, **caractérisé en ce que**
- le mélange de lactides passe en continu par plusieurs segments (35) d'une extrudeuse à rouleaux planétaires (1) de construction modulaire, des mesures et une commande ciblée du déroulement de la réaction dans l'extrudeuse à rouleaux planétaires (1) étant effectuées dans les segments (35) afin de pouvoir régler la température par chauffage et/ou refroidissement en fonction de valeurs de température à vérifier par le biais de capteurs et de pouvoir régler de manière variable, en fonction de valeurs de pression à vérifier par le biais de capteurs, la pression par le biais d'une sortie de gaz commandable et/ou d'une vitesse d'extrudeuse commandable et/ou d'une variabilité statique des rouleaux planétaires et/ou d'une vitesse de dosage variable du mélange de lactides et/ou d'un rapport de mélange variable du mélange de lactides,
- une sortie (6) de gaz inflammable est effectuée au moins dans une région partielle de l'extrudeuse à rouleaux planétaires (1) dans une zone antidéflagrante (5),
- une amenée d'au moins un catalyseur (27) est effectuée directement jusque dans l'extrudeuse à rouleaux planétaires (1) pendant le processus de laminage,
- une amenée d'additifs (26) est effectuée directement jusque dans l'extrudeuse à rouleaux planétaires pendant le processus de laminage pour influer sur les propriétés finales.

2. Procédé selon la revendication 1, **caractérisé en ce que** le mélange de lactides passe par une pluralité de zones (33) d'un segment (35) de l'extrudeuse à rouleaux planétaires (1) dans la direction longitudinale de l'extrudeuse à rouleaux planétaires (1) et une mesure et une commande ciblée du déroulement de la réaction dans l'extrudeuse à rouleaux planétaires (1) sont effectuées dans les zones afin de pouvoir régler, en fonction de valeurs de température à vérifier par le biais de capteurs, la température par chauffage et/ou refroidissement et/ou de pouvoir régler la pression par le biais d'une sortie de gaz commandable (6) et/ou un dimensionnement modifié des rouleaux planétaires (3).

3. Procédé selon la revendication 1, **caractérisé en ce que** le mélange de lactides passe par une pluralité de zones (34) d'un segment (35) de l'extrudeuse à rouleaux planétaires (1) dans la périphérie de l'extrudeuse à rouleaux planétaires (1) et une mesure et une commande ciblée du déroulement de la réaction dans l'extrudeuse à rouleaux planétaires (1) sont effectuées dans les zones (34) afin de pouvoir régler la température par chauffage et/ou refroidissement en fonction de valeurs de température à vérifier par le biais de capteurs et/ou de pouvoir régler la pression par le biais d'une sortie de gaz commandable (6) en fonction de valeurs de pression à vérifier par le biais de capteurs.

4. Procédé selon l'une des revendications 1 à 3, **caractérisé en ce que**, après l'amenée du catalyseur (27), une couleur et/ou des charges sont ajoutées comme additifs (26) pour influer sur les propriétés finales.

5. Procédé selon l'une des revendications 1 à 4, **caractérisé en ce qu'**une amenée d'un neutralisant (30) est effectuée jusque dans l'extrudeuse à rouleaux planétaires (1) vers la fin du procédé directement.

6. Installation destinée à la mise en œuvre d'un procédé selon l'une des revendications 1 à 5, **caractérisée en ce que**
- au moins un réservoir (24) comprenant un mélange de lactides est relié à l'extrudeuse à rouleaux planétaires (1) par le biais d'une conduite d'amenée (31),
- l'extrudeuse à rouleaux planétaires (1) est conçue de manière modulaire **en ce qu'**elle est divisée en une pluralité de segments (35) comprenant chacun une pluralité de rouleaux planétaires (3) tournant autour d'un rouleau central (2), des espaces intermédiaires (17) étant ménagés entre les segments individuels (35) et des intervalles (32) étant ménagés entre les rouleaux planétaires (3) et le boîtier d'extrudeuse (31) et entre les rouleaux planétaires (3) et le rouleau central (2), espaces intermédiaires et intervalles dans lesquels débouchent au moins une amenée de catalyseur (27) et au moins une amenée (15) d'additifs (26) et au moins une amenée de neutralisant (30) et au moins une sortie (6) de gaz inflammable,
- les intervalles (32) augmentent de segment (35) en segment (35), dans le sens d'écoulement (25) de la matière à traiter, en fonction de la consistance attendue de la matière à transporter,
- au moins une zone partielle de l'extrudeuse à rouleaux planétaires (1) comporte une zone antidéflagrante (5) à partir de laquelle est effectuée une sortie (6) de gaz inflammable des espaces intermédiaires (17) et/ou des intervalles (32),
- un système de détection (16) destiné à l'acquisition de données est disposé sur et/ou dans l'extrudeuse à rouleaux planétaires (1) dans chacun des segments (35),
- un système de détection destiné à vérifier des valeurs de température permet d'influer sur la température dans l'extrudeuse à rouleaux planétaires (1) afin de pouvoir régler de manière variable la température dans les segments (35) de l'extrudeuse à rouleaux planétaires (1) par chauffage (9) et/ou refroidissement (19), et
- un système de détection destiné à vérifier des valeurs de pression permet d'influer sur la pression dans l'extrudeuse à rouleaux planétaires (1) afin de pouvoir régler de manière variable la pression dans les segments (35) de l'extrudeuse à rouleaux planétaires (1) au moyen d'une aspiration de gaz commandable et/ou d'une vitesse d'extrudeuse commandable et/ou d'une variabilité statique des rouleaux planétaires (3) et/ou d'une vitesse de dosage variable du mélange de lactides et/ou d'un rapport de mélange variable du mélange de lactides,
- l'extrudeuse à rouleaux planétaires est conçue pour être étanche aux liquides et aux gaz,
- le polylactide résultant peut être retiré par une ouverture de sortie (18).

7. Installation selon la revendication 6, **caractérisée en ce qu'**au moins un des segments (35) est divisé en une pluralité de zones (33) dans la direction longitudinale de l'extrudeuse à rouleaux planétaires (1) et un système de détection (16) destiné à l'acquisition de données est disposé dans chaque zone (33),
- un système de détection destiné à vérifier des valeurs de température permettant d'influer sur la température afin de pouvoir régler la température dans les zones individuelles (33) par chauffage (9) et/ou refroidissement (19), et
- un système de détection destiné à vérifier des valeurs de pression permettant d'influer sur la pression afin de pouvoir régler de manière variable la pression dans les segments (35) de l'extrudeuse à rouleaux planétaires (1) au moyen d'une sortie de gaz commandable (6) et/ou d'une variabilité statique des rouleaux planétaires (3).

8. Installation selon les revendications 6 et 7, **caractérisée en ce que** l'un au moins des segments (35) est divisé en une pluralité de zones (34) dans la périphérie de l'extrudeuse à rouleaux planétaires (1) et un système de détection (16) destiné à l'acquisition de données est disposé dans chaque zone (34),
- un système de détection destiné à vérifier des valeurs de température permettant d'influer sur la température afin de pouvoir régler la température dans les zones individuelles (33) par chauffage (9) et/ou refroidissement (19), et
- un système de détection destiné à vérifier des valeurs de pression permettant d'influer sur la pression afin de pouvoir régler de manière variable la pression dans les zones (34) de l'extrudeuse à rouleaux planétaires (1) au moyen d'une sortie de gaz commandable (6).

9. Installation selon la revendication 6 à 8, **caractérisée en ce que** la zone antidéflagrante (5) est formée par une enceinte (14).

10. Installation selon l'une des revendications 6 à 9, **caractérisée en ce que**, à l'intérieur de la zone antidéflagrante (5), tous les composants contenus sont conçus pour être antidéflagrants.
